# EUROPEAN PATENT SPECIFICATION

(11) **EP 3 984 655 B1**
(45) Date of publication and mention of the grant of the patent: **18.10.2023**
(21) Application number: 20822258.8
(22) Date of filing: 10.04.2020
(51) Int. Cl.: B05D 5/00, B05D 7/24, C09D 133/02, C09D 133/26, C09D 141/00, C09D 201/00, C09K 3/00, C09D 7/63, C09D 7/65, C09D 129/04, C09D 151/00

(54) **HYDROPHILIZATION TREATMENT AGENT AND METHOD FOR FORMING HYDROPHILIC COATING FILM**
HYDROPHILIERUNGSBEHANDLUNGSMITTEL UND VERFAHREN ZUR HERSTELLUNG EINER HYDROPHILEN BESCHICHTUNGSSCHICHT
AGENT DE TRAITEMENT D'HYDROPHILISATION ET PROCÉDÉ DE FORMATION D'UN FILM DE REVÊTEMENT HYDROPHILE

(30) Priority: 11.06.2019 JP 2019109124
(43) Date of publication of application: 20.04.2022
(73) Proprietor: Nippon Paint Surf Chemicals Co., Ltd., Shinagawa-ku Tokyo 140-8675 (JP)
(72) Inventor: MATSUZAKI, Masaki, Tokyo 140-8675 (JP); KANEKO, Souhei, Tokyo 140-8675 (JP); MIKUNI, Suzuka, Tokyo 140-8675 (JP); SAITO, Koichi, Tokyo 140-8675 (JP)
(74) Representative: Herzog IP Patentanwalts GmbH
(86) International application number: PCT/JP2020/016121
(87) International publication number: WO 2020/250560

(56) References cited:
- WO-A1-2018/186497
- JP-A- H03 254 864
- JP-A- H10 130 580
- JP-A- S62 209 184
- JP-A- 2000 219 974
- JP-A- 2016 222 920
- JP-A- 2018 091 556
- JP-A- 2018 177 910
- US-A1- 2018 134 910

## Description

### TECHNICAL FIELD

The present invention relates to a hydrophilization treatment agent and a method for forming a hydrophilic coating film.

### BACKGROUND ART

Techniques for performing hydrophilization treatment on the surface of a metal base material have conventionally been known. For example, in a heat exchanger using aluminum, a fin surface is subjected to hydrophilization treatment to prevent problems such as the occurrence of noise resulting from the condensed water attached to the fin surface and contamination due to scattering of water droplets.

As the hydrophilization treatment agent used in the hydrophilization treatment, for example, a hydrophilization treatment agent containing a modified polyvinyl alcohol-based resin having an acetoacetyl group and an oxyalkylene group and a cross-linking agent is proposed (for example, see Patent Literature 1). According to the hydrophilization treatment agent described in Patent Literature 1, a coating film which is excellent in not only hydrophilicity but also water resistance can be formed.

However, the condensed water tends to be stabilized and be difficult to be removed on the coating film having excellent hydrophilicity. That is, the more excellent the hydrophilicity of the coating film is, the worse the water droplet removal properties become. Then, as a treatment agent which can provide a coating film having excellent hydrophilicity and water droplet removal properties, a hydrophilic paint containing hydrophilic polymer (a) and a cross-linking agent (b) is disclosed (see Patent Literature 2

Patent document 3 discloses a hydrophilization treatment agent comprising an aqueous resin dispersion (A)and crosslinkable fine particles (B), wherein the aqueous resin dispersion (A) comprises an ethylene-vinyl alcohol copolymer (Al) and a radical polymer (A2) having a structural unit derived from a radically polymerizable carboxylic acid monomer (A2-1).

Patent Document 1: Japanese Unexamined Patent Application, Publication No. 2014-141625
Patent Document 2: Japanese Unexamined Patent Application, Publication No. 2017-020015
Patent Document 3 : US 2018/134910

### DISCLOSURE OF THE INVENTION

### Problems to be Solved by the Invention

According to the hydrophilic paint described in Patent Literature 2, a coating film having excellent hydrophilicity and water droplet removal properties can be obtained. However, it has been desired to further improve the durability of water droplet removal properties, in some cases.

The present invention has been made in view of the circumstances described above, and objects of the present invention are to provide a hydrophilization treatment agent capable of forming a coating film which has excellent hydrophilicity and water droplet removal properties and can maintain excellent water droplet removal properties, and a method for forming a hydrophilic coating film.

### Means for Solving the Problems

The present inventors have found that the above problems can be solved by a combination of a specific aqueous resin dispersion and specific crosslinkable fine particles further with a polyetheramine in a specific composition, thereby completing the present invention.

That is, the present invention provides a hydrophilization treatment agent including an aqueous resin dispersion (A), crosslinkable fine particles (B), and a polyetheramine (C), wherein the aqueous resin dispersion (A) includes an ethylene-vinyl alcohol copolymer (A1) and a radical polymer (A2) having a structural unit derived from a radically polymerizable carboxylic acid monomer (A2-1);
a mass ratio of the ethylene-vinyl alcohol copolymer (A1) to a mass of the radical polymer (A2), ((A1)/(A2)), is 0.43 to 2.33;
a mass ratio of the crosslinkable fine particles (B) to a resin solid content of the aqueous resin dispersion (A), ((B)/(A)), is 0.11 to 1.43; and
a mass ratio of the polyetheramine (C) to a total mass of the resin solid content of the aqueous resin dispersion (A) and the crosslinkable fine particles (B), ((C)/((A)+(B))), is 0.1 to 0.38.

The radical polymer (A2) may further have a structural unit derived from at least one monomer selected from the group consisting of a radically polymerizable sulfonic acid monomer (A2-2) and a radically polymerizable monomer having neither a carboxylic acid group nor a sulfonic acid group (A2-3).

The aqueous resin dispersion (A) may further include a hydrophilic compound (A3).

The hydrophilization treatment agent may further include a hydrophilic compound (D), and a mass ratio of the hydrophilic compound (D) to a total mass of the resin solid content of the aqueous resin dispersion (A), the crosslinkable fine particles (B), and the polyetheramine (C), ((D)/((A)+(B)+(C))), may be 0.14 or less.

The hydrophilization treatment agent may further include a cross-linking agent (E), and a mass ratio of the cross-linking agent (E) to the total mass of the resin solid content of the aqueous resin dispersion (A), the crosslinkable fine particles (B), and the polyetheramine (C), ((E)/((A)+(B)+(C))), may be 0.10 or less.

In the aqueous resin dispersion (A), the radical polymer (A2) may be obtained by radical (co)polymerization in a solution containing the ethylene-vinyl alcohol copolymer (A1).

The crosslinkable fine particles (B) may be a copolymer of a monomer (b1) represented by the following formula (I), a monomer (b2) having a polyoxyalkylene chain and a polymerizable double bond, and an additional polymerizable monomer (b3): 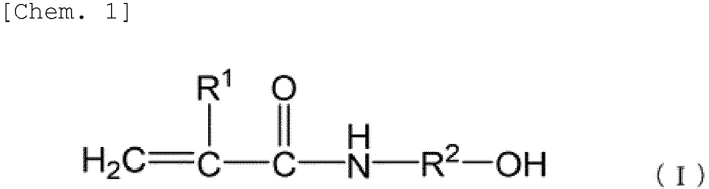 wherein R¹ is hydrogen or a methyl group, and R² is CH₂ or C₂H₄.

Another aspect of the present invention is a method for forming a hydrophilic coating film, including a hydrophilic coating film formation step of forming a hydrophilic coating film by bringing the hydrophilization treatment agent into contact with a surface of a base material.

### Effects of the Invention

According to the hydrophilization treatment agent and the method for forming a hydrophilic coating film of the present invention, a coating film in which an ionic bond network is formed between a carboxyl group included in the aqueous resin dispersion (A) and an amino group in the polyetheramine (C) can be obtained. Thus, the dispersibility of the aqueous resin dispersion (A) and the crosslinkable fine particles (B) is improved in the coating film to be obtained, and as a result, a coating film which has excellent hydrophilicity and water droplet removal properties and can maintain excellent water droplet removal properties can be obtained.

Since the above network is formed according to the hydrophilization treatment agent and the method for forming a hydrophilic coating film of the present invention, it is possible to form a coating film without adding a cross-linking agent that has conventionally been required.

### PREFERRED MODE FOR CARRYING OUT THE INVENTION

Hereinafter, embodiments of the present invention will be described. The present invention is not limited to the following embodiments.

### <Hydrophilization Treatment Agent>

The hydrophilization treatment agent of the present invention contains an aqueous resin dispersion (A), crosslinkable fine particles (B), and a polyetheramine (C). The aqueous resin dispersion (A) includes an ethylene-vinyl alcohol copolymer (hereinafter also referred to as "EVOH") (A1) and a radical polymer (A2). In the present invention, when the mass ratio of each component, the EVOH (A1), the radical polymer (A2), the crosslinkable fine particles (B), and the polyetheramine (C), is within a specific range, a coating film which has excellent hydrophilicity and water droplet removal properties and can maintain excellent water droplet removal properties can be formed. The hydrophilization treatment agent of the present invention may further contain a hydrophilic compound (D) and a cross-linking agent (E).

### <Aqueous Resin Dispersion (A)>

As a resin solid content, the aqueous resin dispersion (A) used in the present invention includes the ethylene-vinyl alcohol copolymer (EVOH) (A1) and the radical polymer (A2) as essential components.

### [Ethylene-Vinyl Alcohol Copolymer (EVOH) (A1)]

The ethylene-vinyl alcohol copolymer (EVOH) (A1) which is the resin solid content of the aqueous resin dispersion (A) is a component that imparts hydrophobicity to the coating film. The EVOH (A1) has an ethylene structural unit and a vinyl alcohol structural unit. The content of the ethylene structural unit in the EVOH (A1) is preferably 25 to 44 mol%. When the content of the ethylene structural unit is within this range, the aqueous resin dispersion (A) having excellent dispersion stability while maintaining the characteristics inherent in the EVOH can be obtained.

As the EVOH (A1), commercial products can be used. Examples thereof include "EVAL" manufactured by KURARAY CO., LTD. and "Soarnol" manufactured by The Nippon Synthetic Chemical Industry Co., Ltd.

### [Radical Polymer (A2)]

The radical polymer (A2) which is the resin solid content of the aqueous resin dispersion (A) is a component that imparts hydrophobicity to the coating film. The radical polymer (A2) has a structural unit derived from a radically polymerizable carboxylic acid monomer (A2-1). That is, the radical polymer (A2) can be obtained by radical polymerization of a radically polymerizable monomer essentially including the radically polymerizable carboxylic acid monomer (A2-1).

### (Radically Polymerizable Carboxylic Acid Monomer (A2-1))

Examples of the radically polymerizable carboxylic acid monomer (A2-1) which is the essential constituent monomer of the radical polymer (A2) include unsaturated monocarboxylic acids such as itaconic acid, acrylic acid, methacrylic acid, crotonic acid, and cinnamic acid; unsaturated dicarboxylic acids such as maleic acid, fumaric acid, citraconic acid, and chloromaleic acid and anhydrides thereof; monoesters of unsaturated dicarboxylic acids such as monomethyl maleate, monoethyl maleate, monobutyl maleate, monomethyl fumarate, monoethyl fumarate, monomethyl itaconate, monoethyl itaconate, and monobutyl itaconate. These may be used alone or in combination of two or more. Metal salts and ammonium salts of these may also be used. Among these, itaconic acid, acrylic acid, and methacrylic acid are particularly preferable.

### (Additional Radically Polymerizable Monomer)

The radical polymer (A2) which is the resin solid content of the aqueous resin dispersion (A) may further have a structural unit derived from at least one monomer selected from the group consisting of a radically polymerizable sulfonic acid monomer (A2-2) and a radically polymerizable monomer having neither carboxylic acid group nor sulfonic acid group (A2-3), as an optional structural unit.

### (Radically Polymerizable Sulfonic Acid Monomer (A2-2))

Examples of the radically polymerizable sulfonic acid monomer (A2-2) which is an optional constituent monomer of the radical polymer (A2) include methacrylate-based sulfonic acid monomers, acrylamide-based sulfonic acid monomers, allyl-based sulfonic acid monomers, vinyl-based sulfonic acid monomers, and styrene-based sulfonic acid monomers. These monomers may be used alone or in combination of two or more. In addition, metal salts and the like of these may also be used. Among these, HAPS (sodium salt of 3-allyloxy-2-hydroxy-1-propane sulfonic acid) and AMPS (2-acrylamide-2-methylpropane sulfonic acid) are particularly preferable.

### (Radically Polymerizable Monomer Having Neither Carboxylic Acid Group nor Sulfonic Acid Group (A2-3))

Examples of the radically polymerizable monomer having neither carboxylic acid group nor sulfonic acid group (A2-3) which is an optional constituent monomer of the radical polymer (A2) include the following radically polymerizable monomers (A2-3-a) to (A2-3-c). The radically polymerizable monomers (A2-3-a) to (A2-3-c) may be used alone or in combination of two or more.

Examples of the radically polymerizable monomer (A2-3-a) include radically polymerizable monomers represented by the following formula (II):
[Chem. 2]

CH₂ = C(R¹⁰)CO - (OCH₂CH₂)ₚ - OR¹¹ (II)

wherein R¹⁰ represents hydrogen or a methyl group, R¹¹ represents hydrogen or methyl, and p is an integer of 1 to 200.

That is, the radically polymerizable monomer (A2-3-a) is (poly)ethylene glycol mono(meth)acrylate or methoxy polyethylene glycol (meth)acrylate in which p is an integer of 1 to 200, as represented by the above formula (II). When a structural unit derived from the radically polymerizable monomer (A2-3-a) is included in the radical polymer (A2), the hydrophilicity and dispersion stability of the coating film to be obtained can be improved.

Examples of the radically polymerizable monomer (A2-3-b) include at least one radically polymerizable monomer selected from the group consisting of (meth)acrylamide, N-vinyl formamide, N-vinylacetamide, and N-vinyl pyrrolidone. These monomers may be used alone or in combination of two or more. Among these, N-vinyl formamide (NVF) and acrylamide (AAm) are preferable.

The radically polymerizable monomer (A2-3-b) has an amide bond. When a structural unit derived from the radically polymerizable monomer (A2-3-b) is included in the radical polymer (A2), the hydrophilicity and dispersion stability of the coating film to be obtained can be improved.

Examples of the radically polymerizable monomer (A2-3-c) include radically polymerizable hydroxyl group-containing monomers such as hydroxypropyl(meth)acrylate; radically polymerizable amide group-containing monomers such as N-methylol(meth)acrylamide and N,N-dimethyl(meth)acrylamide; radically polymerizable silyl group-containing monomers such as γ-(meth)acryloxypropyltrimethoxysilane; radically polymerizable epoxy group-containing monomers such as glycidyl methacrylate; radically polymerizable ester group-containing monomers such as methyl(meth)acrylate and ethylene glycol dimethacrylate; and vinyl group-containing monomers such as vinyl acetate, styrene, acrylonitrile, and divinylbenzene.

The radically polymerizable monomer (A2-3-c) may be used alone or in combination of two or more. Among these, N,N-dimethylacrylamide (DMAA) and glycidyl methacrylate (GMA) are particularly preferable.

When a structural unit derived from the radically polymerizable monomer (A2-3-c) is included in the radical polymer (A2), hydrophilicity, dispersion stability, and further, crosslinkability can be imparted to the coating film to be obtained. The hydrophilicity and dispersion stability of the coating film can be improved.

### [Hydrophilic Compound (A3)]

The aqueous resin dispersion (A) constituting the hydrophilization treatment agent of the present invention may further include a hydrophilic compound (A3) as the resin solid content.

The hydrophilic compound (A3) is preferably at least one selected from the group consisting of compounds having a structure represented by the following formula (III) and compounds having a polyvinyl pyrrolidone (PVP) structure:
[Chem. 3]

R¹²O(CH₂CH₂O)_{q}- (III)

wherein R¹² represents hydrogen or a methyl group, and q is an integer of 2 to 100,000.

Examples of the compounds having a structure represented by the above formula (III) include polyethylene glycol, polyethylene oxide, and polyoxyethylene group-containing polyvinyl alcohol. Examples of the compounds having a polyvinyl pyrrolidone (PVP) structure include PVP and PVP modified PVA.

The hydrophilic compound (A3) may be used alone or in combination of two or more. Among these, polyethylene glycol (PEG), polyethylene oxide (PEG), or polyoxyethylene group-containing polyvinyl alcohol (EO-PVA) is particularly preferable.

When the aqueous resin dispersion (A) constituting the hydrophilization treatment agent of the present invention further contains the hydrophilic compound (A3), excellent dispersion stability is imparted to the aqueous resin dispersion (A), and further, the hydrophilicity of the coating film to be obtained can be improved.

### <Method for Producing Aqueous Resin Dispersion (A)>

The method for producing the aqueous resin dispersion (A) constituting the hydrophilization treatment agent of the present invention preferably includes a step of carrying out a radical (co)polymerization reaction of a monomer including the radically polymerizable carboxylic acid monomer (A2-1) as an essential component, in a solution containing the ethylene-vinyl alcohol copolymer (EVOH) (A1) to obtain the radical polymer (A2).

In the case where the hydrophilic compound (A3) is further contained in the aqueous resin dispersion (A), it is preferable to include a step of carrying out the radical (co)polymerization reaction of the monomer that includes the radically polymerizable carboxylic acid monomer (A2-1) as an essential component, in a solution containing the ethylene-vinyl alcohol copolymer (EVOH) (A1) and the hydrophilic compound (A3) to obtain the radical polymer (A2).

The radical polymerization method is not particularly limited, and a conventionally known method can be employed. Also, the radical polymerization initiator to be used is not particularly limited, and a conventionally known one can be used.

That is, in the case of using a (co)polymer of the radically polymerizable carboxylic acid monomer (A2-1) group as the radical polymer (A2), the radically polymerizable carboxylic acid monomer (A2-1) is preferably added into a solution containing the EVOH (A1) and, as needed, the hydrophilic compound (A3) and copolymerized.

In the case of using a copolymer of the radically polymerizable carboxylic acid monomer (A2-1) group and at least one monomer selected from the group consisting of the radically polymerizable sulfonic acid monomer (A2-2) group and the radically polymerizable monomer having neither carboxylic acid group nor sulfonic acid group (A2-3) as the radical polymer (A2), the radically polymerizable carboxylic acid monomer (A2-1) group and other monomer groups can be simultaneously added into a solution containing the EVOH (A1) and, as needed, the hydrophilic compound (A3) and copolymerized. Alternatively, any monomer group may be firstly added into the solution containing the EVOH (A1) and, as needed, the hydrophilic compound (A3) and (co)polymerized, and then, other monomer groups may be sequentially added thereinto and (co)polymerized.

As the method for producing the aqueous resin dispersion (A) constituting the hydrophilization treatment agent of the present invention, only (co)polymerization of the radically polymerizable carboxylic acid monomer (A2-1) group which is the essential component may be carried out in a dissolution solution containing the EVOH (A1) and, as needed, the hydrophilic compound (A3), and then, a (co)polymer of other monomer groups may be added and mixed by stirring.

One example of the method for producing the aqueous resin dispersion (A) constituting the hydrophilization treatment agent of the invention will be described below.

First, an appropriate amount of a mixed solution of water and methanol is added to the EVOH (A1) in a pellet form. After addition, the mixture is heated at a temperature equal to or higher than the glass transition temperature of the EVOH (A1) and equal to or lower than the boiling point of the solvent, and stirred for a predetermined time to obtain a dissolution solution of the EVOH (A1).

Then, the hydrophilic compound (A3) is dissolved in the dissolution solution of the EVOH (A1), as needed. To the obtained solution, the radically polymerizable carboxylic acid monomer (A2-1) constituting the essential structural unit of the radical polymer (A2), and optionally, a monomer mixed solution containing at least one monomer selected from the group consisting of the radically polymerizable sulfonic acid monomer (A2-2) and the radically polymerizable monomer having neither carboxylic acid group nor sulfonic acid group (A2-3), and a solution containing a radical polymerization initiator are added dropwise under a nitrogen atmosphere to cause a radical (co)polymerization reaction.

Then, a base (aqueous ammonia is preferable) equivalent to the acid equivalent in the monomer used is added dropwise to neutralize the mixture. Subsequently, methanol is distilled off while supplying water under heating to change the medium to water.

Finally, the mixture is cooled and filtered to obtain the aqueous resin dispersion (A) constituting the hydrophilization treatment agent of the present invention.

### <Crosslinkable Fine Particles (B)>

The crosslinkable fine particles (B) constituting the hydrophilization treatment agent of the present invention are resin fine particles consisting of a copolymer obtained by copolymerizing monomer components consisting of a monomer (b1) represented by the following formula (I), a monomer having a polyoxyalkylene chain and a polymerizable double bond (b2), and an additional polymerizable monomer (b3): 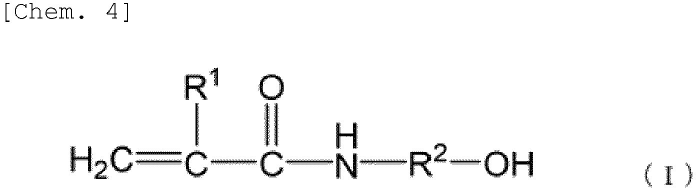 wherein R¹ is hydrogen or a methyl group, and R² is CH₂ or C₂H₄.

When the crosslinkable fine particles (B), having high hydrophilicity and relatively many unreacted functional groups, are used as a component of the hydrophilization treatment agent, they can react with other hydrophilic resins contained in the hydrophilization treatment agent and significantly improve the hydrophilic durability after attachment of contamination substances, without compromising hydrophilicity.

Further, since the crosslinkable fine particles (B) have a relatively small swelling rate with respect to water, they can also prevent the hydrophilic coating film to be formed from dissolving in water.

The monomer (b1) represented by the above formula (I) which is a constituent component of the crosslinkable fine particles (B) is N-methylolacrylamide, N-methylolmethacrylamide, N-hydroxyethylacrylamide, or N-hydroxyethylmethacrylamide. These may be used alone or in combination of two or more.

As a result that the crosslinkable fine particles (B) include the monomer (b1) represented by the above formula (I) as a constituent component, a hydrophilic coating film having excellent hydrophilic durability and adhesiveness to a base material can be formed from the hydrophilization treatment agent to be obtained.

The monomer having a polyoxyalkylene chain and a polymerizable double bond (b2) which is a constituent component of the crosslinkable fine particles (B) is preferably a compound containing a polyoxyalkylene chain in an amount of 50% by mass or more. Here, 50% by mass or more means that, in 100% by mass of the solid content of the monomer having a polyoxyalkylene chain and a polymerizable double bond (b2), the total mass of the solid content in the polyoxyalkylene chain part is 50% by mass or more. With the solid content less than 50% by mass, the hydrophilicity of the hydrophilic coating film may be reduced. The monomer having a polyoxyalkylene chain and a polymerizable double bond (b2) preferably contains the polyoxyalkylene chain in an amount of 80 to 99% by mass.

The additional polymerizable monomer (b3) which is a constituent component of the crosslinkable fine particles (B) is not particularly limited as long as it is a compound which has a polymerizable unsaturated bond in one molecule and can be copolymerized with the monomer (b1) represented by the above formula (I) and the monomer having a polyoxyalkylene chain and a polymerizable double bond (b2).

### [Water Swelling Rate]

The crosslinkable fine particles (B) used in the present invention preferably have a water swelling rate of 1.0 to 1.5. As a result, when a hydrophilic coating film is formed from the hydrophilization treatment agent containing the crosslinkable fine particles (B), the reduction of the adhesiveness between the coating film and the base material can be prevented, even if the coating film is exposed to the moisture. The water swelling rate is more preferably 1.0 to 1.3.

The water swelling rate of 1.5 or less can be obtained by a combination of the monomer (b1) represented by the above formula (I), the monomer having a polyoxyalkylene chain and a polymerizable double bond (b2), and the additional polymerizable monomer (b3) at the aforementioned ratio and by appropriately setting the reaction conditions.

The water swelling rate as used herein is a value calculated by: the water swelling rate = the particle diameter (D₅₀) in an aqueous solution/the particle diameter (D₅₀) in a solvent. The particle diameter (D₅₀) is a value measured by using an electrophoretic light scattering photometer, photal ELS-800 (manufactured by Otsuka Electronics Co., Ltd.).

### [Average Particle Diameter]

The average particle diameter of the crosslinkable fine particles (B) is not particularly limited, but is preferably in a range of 50 to 500 nm. It is further preferably in a range of 50 to 300 nm, and particularly preferably in a range of 50 to 250 nm. When the range is 50 to 500 nm, a coating film formed from the hydrophilization treatment agent containing the crosslinkable fine particles (B) is the coating film having excellent hydrophilicity and water droplet removal properties.

### <Method for Producing Crosslinkable Fine Particles (B)>

The method for producing the crosslinkable fine particles (B) used in the hydrophilization treatment agent of the present invention is not particularly limited, but for example, the crosslinkable fine particles (B) can be produced by polymerizing 30 to 95% by mass of the monomer (b1) represented by the above formula (I), 5 to 60% by mass of the monomer having a polyoxyalkylene chain and a polymerizable double bond (b2), and 0 to 50% by mass of the additional polymerizable monomer (b3) in a water-miscible organic solvent in which the monomers used can be dissolved but the copolymer produced cannot be substantially dissolved or in a water-miscible organic solvent/water mixed solvent, in the absence of a dispersion stabilizer.

### <Polyetheramine (C)>

The polyetheramine (C) constituting the hydrophilization treatment agent of the present invention is a compound having a polyether chain in the main chain and an amino group on the terminal.

Although the hydrophilization treatment agent of the present invention contains the aqueous resin dispersion (A), the crosslinkable fine particles (B), and the polyetheramine (C) as essential components, the presence of the polyetheramine (C) enables the resin solid content contained in the aqueous resin dispersion (A) and the crosslinkable fine particles (B) to be prevented from forming a domain individually when a coating film is formed. That is, in the hydrophilization treatment agent of the present invention, the polyetheramine (C) has a role in improving the dispersibility of the resin solid content derived from the aqueous resin dispersion (A) and the crosslinkable fine particles (B) in the coating film to be formed.

As a result of the improvement in the dispersibility of the resin solid content derived from the aqueous resin dispersion (A) and the crosslinkable fine particles (B) in the coating film to be formed, the coating film to be obtained has hydrophilicity and excellent water droplet removal properties, and further, can maintain the water droplet removal properties for a long term.

The polyetheramine (C) constituting the hydrophilization treatment agent of the present invention is a polyether monoamine represented by the following formula (IV-1) or polyether diamine represented by the following formula (IV-2): 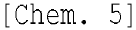 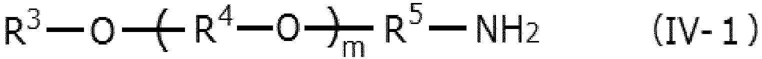 wherein R³ is a methyl group or an ethyl group, R⁴ is C₂H₄ or C₃H₆, R⁵ is CH₂, C₂H₄, or C₃H₆, and m is 1 to 100, 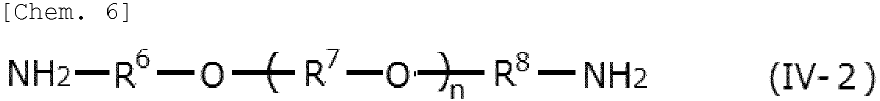 wherein R⁶ and R⁸ are each independently CH₂, C₂H₄, C₃H₆, R⁷ is C₂H₄ or C₃H₆, and n is 1 to 100.

In the polyetheramine (C) represented by the above formula (IV-1) and formula (IV-2), the type of the ether of R⁴ and R⁷ which constitute the polyether chain may be one or a combination of two or more ethers. That is, in the polyetheramine (C) represented by the above formula (IV-1) and formula (IV-2), a repeat unit derived from ethylene oxide and a repeat unit derived from propylene oxide may coexist in the polyether chain.

In the polyetheramine (C) represented by the above formula (IV-1) and formula (IV-2), m and n are within a range of 1 to 100, and are preferably within a range of 1 to 70, and further preferably within a range of 8 to 50. When m or n exceeds 100 in the polyetheramine (C) represented by the above formula (IV-1) and formula (IV-2), the coating film to be obtained is likely to be dissolved and durability is reduced.

The polyetheramine (C) represented by the above formula (IV-1) and formula (IV-2) may have a structure in which two or more ether chains are combined, as described above. In this case, the total number of repetitions of each type of ether unit is defined as m or n.

In the present invention, the polyether diamine represented by the above formula (IV-2) having an amino group on both terminals is preferably used. According to the hydrophilization treatment agent and the method for forming a hydrophilic coating film of the present invention, a coating film in which an ionic bond network is formed between a carboxyl group included in the aqueous resin dispersion (A) and an amino group in the polyetheramine (C) can be obtained. Therefore, amino groups in the polyetheramine (C) are preferably present on both terminals to form a more robust network.

Examples of the polyetheramine (C) constituting the hydrophilization treatment agent of the present invention include a compound represented by the following formula (V). The polyetheramine (C) represented by the following formula (V) is commercially available from HUNTSMAN Corporation under the product name: JEFFAMINE ED series.

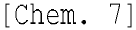

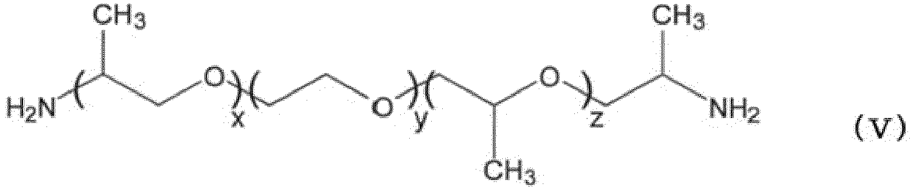

Other examples of the polyetheramine (C) include a compound represented by the following formula (VI). The polyetheramine (C) represented by the following formula (VI) is commercially available from KOEI CHEMICAL CO., LTD. under the product name: PEGPA series.

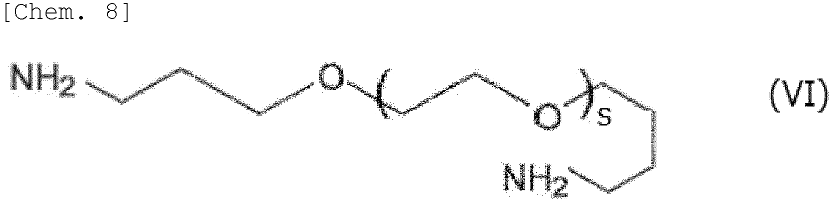

### <Hydrophilic Compound (D)>

The hydrophilic compound (D) which is an optional constituent component of the hydrophilization treatment agent of the present invention is a component imparting hydrophilicity to the coating film. Examples of the hydrophilic compound (D) include resins having a hydrophilic group such as a carboxylic acid group, a sulfonic acid group, or a hydroxyl group.

Specific examples thereof include modified polyvinyl alcohols such as polyvinyl alcohol (PVA) and ethylene oxide-modified polyvinyl alcohol (EO-PVA), polyacrylic acid (PAA), polyacrylamide (PAAm), carboxymethylcellulose (CMC), polyvinyl pyrrolidone (PVP), polyalkylene ether (PAE), N-methylolacrylamide (NMAM), poly-N-vinyl formamide (PNVF), acrylic acid copolymers, sulfonic acid copolymers, and amide copolymers. These may be used alone or in combination of two or more.

### <Cross-Linking Agent (E)>

The cross-linking agent (E) which is an optional constituent component of the hydrophilization treatment agent of the present invention is a component imparting mechanical strength to the coating film. Although the hydrophilization treatment agent of the present invention not containing the cross-linking agent (E) can form a coating film, the cross-linking agent (E) can be used to form a coating film having higher strength.

Examples of the cross-linking agent (E) include a melamine resin and a silane coupling agent. Specific examples of the melamine resin include "CYMEL 370N" manufactured by Nihon Cytec Industries Inc. Examples of the silane coupling agent include "KBM-403" manufactured by Shin-Etsu Chemical Co., Ltd. These may be used alone or in combination of two or more.

### <Other components>

The hydrophilization treatment agent of the present invention may further contain an antirust material. Examples of the antirust material include a zirconium compound, a vanadium compound, a titanium compound, a niobium compound, a phosphorus compound, a cerium compound, and a chrome compound. These may be used alone or in combination of two or more.

In addition, a pigment may be added to the hydrophilization treatment agent of the present invention to form a colored hydrophilic coating film. The pigment to be added is not particularly limited and a usually used color pigment such as an inorganic pigment and an organic pigment can be used.

In addition, a necessary amount of other components may be optionally added to the hydrophilization treatment agent of the present invention, depending on the function to be imparted. Examples of other components include hydrophilic additives such as surfactants, colloidal silica, titanium oxide, and saccharides; antirust additives such as tannic acid, imidazoles, triazines, triazoles, guanines, hydrazines, phenol resins, zirconium compounds, and silane coupling agents; cross-linking agents such as melamine resins, epoxy resins, block isocyanate, amine, phenol resins, silica, aluminum, and zirconium; antimicrobial agents, dispersing agents, lubricants, deodorants, and solvents.

<Mass Ratio of Each Component>

By setting the mass ratio of each component, the aqueous resin dispersion (A), the crosslinkable fine particles (B), and the polyetheramine (C) which are contained as essential constituent components, and the hydrophilic compound (D) and the cross-linking agent (E) which are contained as optional components, within an appropriate range, the hydrophilization treatment agent of the present invention can form a coating film which has excellent hydrophilicity and water droplet removal properties and can maintain excellent water droplet removal properties, which are the effects of the present invention.

### [Mass Ratio ((A1)/(A2))]

The mass ratio of the ethylene-vinyl alcohol copolymer (EVOH) (A1) to the mass of the radical polymer (A2), ((A1)/(A2)), is 0.43 to 2.33, and is preferably within a range of 0.75 to 2.33.

When the mass ratio ((A1)/(A2)) is less than 0.43, the mass of the EVOH (A1) is so small that the hydrophobicity of the coating film to be obtained becomes lower. Thus, it is difficult to form a coating film having excellent water droplet removal properties. Meanwhile, when the mass ratio ((A1)/(A2)) exceeds 2.33, the mass of the radical polymer (A2) is so small that the hydrophilicity of the coating film to be obtained becomes lower. Thus, it is difficult to form a coating film having excellent hydrophilicity.

### [Mass Ratio ((B)/((A))]

The mass ratio of the crosslinkable fine particles (B) to the resin solid content in the aqueous resin dispersion (A), ((B)/((A)), is 0.11 to 1.43, and is preferably within a range of 0.43 to 1.0.

When the mass ratio ((B)/(A)) is less than 0.11, the number of particles of the crosslinkable fine particles (B) on the surface of the coating film to be obtained is smaller, so that the surface of the coating film to be obtained is likely to be smooth. Meanwhile, when the mass ratio ((B)/(A1+A2)) exceeds 1.43, the number of particles of the crosslinkable fine particles (B) is larger, so that the surface of the coating film to be obtained is likely to be rough.

Here, the smoother the surface of the coating film is, the smaller the contact area between the surface of the coating film and a water droplet is, so that it is difficult to hold the water droplet on the surface of the coating film, and as a result, the hydrophilicity of the coating film is reduced. On the other hand, the rougher the surface of the coating film is, the more difficult it is to remove water droplets from the surface of the coating film, and as a result, the water droplet removal properties are reduced.

Therefore, when the mass ratio ((B)/(A)) is less than 0.11, a coating film having a smooth surface is formed, so that the hydrophilicity of the coating film is reduced. Meanwhile, when the mass ratio ((B)/(A)) exceeds 1.43, a coating film having a rough surface is formed, so that the water droplet removal properties of the coating film are reduced.

### [Mass Ratio ((C)/((A)+(B)))]

The mass ratio of the polyetheramine (C) to the total mass of the resin solid content in the aqueous resin dispersion (A) and the crosslinkable fine particles (B), ((C)/((A)+(B))), is 0.1 to 0.38, and is preferably within a range of 0.15 to 0.25.

When the mass ratio ((C)/((A)+(B))) is less than 0.1, it is difficult to improve the dispersibility of the resin solid content in the aqueous resin dispersion (A) and the crosslinkable fine particles (B). Meanwhile, when the mass ratio ((C)/((A)+(B))) exceeds 0.38, the solid content ratio of the polyetheramine (C) in the coating film is increased, so that the functions of the resin solid content in the aqueous resin dispersion (A) and the crosslinkable fine particles (B) are less likely to be sufficiently exhibited.

### [Mass Ratio ((D)/((A)+(B)+(C)))]

When the hydrophilization treatment agent of the present invention contains the hydrophilic compound (D), the mass ratio of the hydrophilic compound (D) to the total mass of the resin solid content of the aqueous resin dispersion (A), the crosslinkable fine particles (B), and the polyetheramine (C), ((D)/((A)+(B)+(C))), is preferably 0.14 or less.

When the mass ratio ((D)/((A)+(B)+(C))) exceeds 0.14, it is difficult to form a coating film having excellent water droplet removal properties.

### [Mass Ratio ((E)/((A)+(B)+(C)))]

When the hydrophilization treatment agent of the present invention contains the cross-linking agent (E), the mass ratio of the cross-linking agent (E) to the total mass of the resin solid content of the aqueous resin dispersion (A), the crosslinkable fine particles (B), and the polyetheramine (C), ((E)/((A)+(B)+(C))), is preferably 0.10 or less.

When the mass ratio ((E)/((A)+(B)+(C))) exceeds 0.10, it is difficult to form a coating film having excellent water droplet removal properties.

### <Method for Forming Hydrophilic Coating Film>

The method for forming a hydrophilic coating film of the present invention includes a hydrophilic coating film formation step of forming a hydrophilic coating film by bringing the above hydrophilization treatment agent of the present invention into contact with a surface of a base material, as the essential step. By using the method for forming a hydrophilic coating film according to the present invention, a coating film which has excellent hydrophilicity and water droplet removal properties and can maintain excellent water droplet removal properties can be formed. The above effects can be achieved by using the specific hydrophilization treatment agent of the present invention described above. Thus, a common method can be employed as the method for forming a hydrophilic coating film.

### [Hydrophilic Coating Film Formation Step]

The hydrophilic coating film formation step which is the essential step in the method for forming a hydrophilic coating film of the present invention is a step of forming a hydrophilic coating film by bringing the hydrophilization treatment agent of the present invention described above into contact with a surface of a base material which is optionally subjected to surface treatment.

Examples of the method for applying the hydrophilization treatment agent of the present invention include, but are not particularly limited to, roll coating, bar coating, dipping, spray coating, and brush coating.

After the hydrophilization treatment agent is applied, for example, the base material is dried and baked at a temperature of 120 to 300°C for 3 seconds to 60 minutes, so that a hydrophilic coating film can be obtained. When the baking temperature is less than 120°C, sufficient film-forming properties cannot be obtained and the coating film may be dissolved after immersed into water. When the baking temperature exceeds 300°C, resins may be decomposed and the hydrophilicity of the hydrophilic coating film may be compromised.

### (Base Material)

In the method for forming a hydrophilic coating film of the present invention, the kind of the base material to which the hydrophilization treatment agent can be applied is not particularly limited, and the coating film can be formed on a surface of various base materials. Examples thereof include base materials made of resin such as thermoplastic resin such as acryl resin, polycarbonate resin, polyester resin, styrene resin, acryl-styrene copolymer resin, cellulose resin, polyolefin resin, and polyvinyl alcohol and thermosetting resin such as phenol resin, urea resin, melamine resin, epoxy resin, unsaturated polyester, silicone resin, and urethane resin; ceramic; glass; metals such as iron, silicon, copper, zinc, and aluminum; and further, alloys containing the metals described above.

Examples of the applications which require both hydrophilicity and water droplet removal properties and desire a self-cleaning function include a fin material for a heat exchanger, and the hydrophilization treatment agent of the present invention can be preferably used for aluminum which is the base material of the fin material for a heat exchanger.

Also, the shape of the base material is not particularly limited, and for example, it may be planer, curved, or a three-dimensional structure in which multiple planes are combined.

### [Additional step]

The method for forming a hydrophilic coating film of the present invention includes the hydrophilic coating film formation step as the essential step, and it may include an additional step in addition to the hydrophilic coating film formation step. Examples of the additional step include a degreasing treatment step of subjecting a surface of a base material to degreasing treatment and then subjecting it to water washing treatment; a chemical conversion coating film formation step of forming a chemical conversion coating film by bringing the surface of the base material into contact with a chemical conversion agent; and a corrosion resistance surface treatment step of forming a corrosion resistance surface by subjecting the chemical conversion coating film formed by the chemical conversion coating film formation step to primer treatment using an organic resin.

Alternatively, the base material may be subjected to pretreatment such as adhesion facilitating treatment. Examples of the adhesion facilitating treatment include corona treatment, plasma treatment, UV treatment, and primer treatment using a silane-based compound or a resin. This can improve the adhesiveness of the hydrophilic coating film to the base material and improve durability.

### <Hydrophilic Coating Film>

The hydrophilic coating film formed by the method for forming a hydrophilic coating film of the present invention is a hydrophilic coating film which is formed on various base materials, in particular, on the surface of aluminum and an alloy thereof, has excellent hydrophilicity and water droplet removal properties, and can maintain excellent water droplet removal properties.

The film thickness of the hydrophilic coating film is preferably 0.05 g/m² or more, and more preferably 0.1 to 2 g/m². When the film thickness of the coating film is less than 0.05 g/m², the hydrophilic durability, processability, adhesiveness to the base material, and corrosion resistance of the coating film may be insufficient.

The present invention is not limited to the above, and modifications and improvements within a scope that can achieve the objects of the present invention are encompassed by the present invention.

### EXAMPLES

Hereinafter, the present invention will be described in more detail with reference to Examples and Comparative Examples, but the present invention is not limited thereto.

### <Material>

The materials used in Examples and Comparative Examples are shown below.

### [Radically Polymerizable Sulfonic Acid Monomer (A2-2)]

- HAPS: sodium salt of 3-allyloxy-2-hydroxy-1-propane sulfonic acid
- AMPS: 2-acrylamide-2-methylpropane sulfonic acid
- SEMA: sodium salt of sulfoethyl methacrylate

### [Radically Polymerizable Monomer Having Neither Carboxylic Acid Group nor Sulfonic Acid Group (A2-3)]

- A compound represented by the following formula (II), wherein R¹⁰ and R¹¹ are hydrogen, and p = 1
- A compound represented by the following formula (II),
   wherein R¹⁰ and R¹¹ are a methyl group, and p = 113
   [Chem. 9]

   CH₂=C(R¹⁰)CO-(OCH₂CH₂)ₚ-OR¹¹ (II)
- NVF: N-vinyl formamide
- AAm: acrylamide
- DMAA: N,N-dimethylacrylamide
- GMA: glycidyl methacrylate

### [Hydrophilic Compound (A3)]

- PEG: polyethylene glycol (the weight average molecular weight: 20,000)
- PEG: polyethylene oxide (the weight average molecular weight: 500,000)
- EO-PVA: polyoxyethylene-modified polyvinyl alcohol (the weight average molecular weight: 20,000)

### [Polyetheramine (C)]

Product name: JEFFAMINE ED series represented by the following formula (V) and manufactured by HUNTSMAN Corporation
- ED-600: Y = 9.0, X + Z = 3.6 (the weight average molecular weight: 600)
- ED-900: Y = 12.5, X + Z = 6.0 (the weight average molecular weight: 900)
- ED-2003: Y = 39, X + Z = 6.0 (the weight average molecular weight: 2,003)

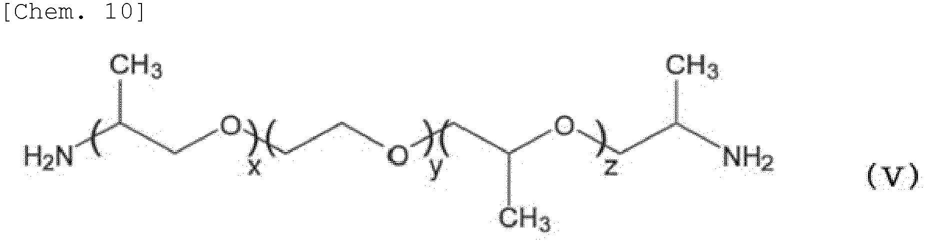

Product name: JEFFAMINE M series represented by the following formula (VII) and manufactured by HUNTSMAN Corporation
- M-1000: the number of moles derived from propylene oxide/ the number of moles derived from ethylene oxide = 3/19 (the weight average molecular weight: 1,000)
- M-2070: the number of moles derived from propylene oxide/ the number of moles derived from ethylene oxide = 10/31 (the weight average molecular weight: 2,000) 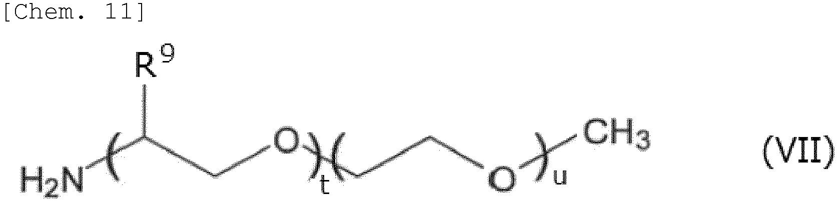
wherein R⁹ is hydrogen or a methyl group.

Product name: PEGPA series represented by the following formula (VI) and manufactured by KOEI CHEMICAL CO., LTD.
- PEGPA-400: the weight average molecular weight: 400
- PEGPA-1000: the weight average molecular weight: 1,000
- PEGPA-2000: the weight average molecular weight: 2,000

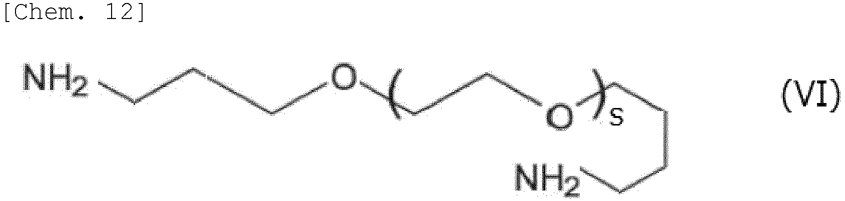

### [Hydrophilic Compound (D)]

- EO-PVA: ethylene oxide-modified PVA (the weight average molecular weight: 20,000)
- PVA: polyvinyl alcohol (the weight average molecular weight: 20,000, the saponification degree: 98.5)
- PAA: polyacrylic acid (the weight average molecular weight: 20,000, acid value: 780 mgKOH/g)
- CMC: carboxymethylcellulose (the weight average molecular weight: 20,000)
- PVP: polyvinyl pyrrolidone (the weight average molecular weight: 20,000)
- PEG: polyethylene glycol (the weight average molecular weight: 20,000)
- NMAM: N-methylolacrylamide
- PNVF: poly-N-vinyl formamide (the weight average molecular weight: 100,000)
- Acrylic acid copolymer: sodium salt of acrylic acid/N-vinyl formamide copolymer (the weight average molecular weight: 700,000)
- Sulfonic acid copolymer: 2-acrylamide-2-methylpropane sulfonic acid/acrylic acid

### [Cross-Linking Agent (E)]

- Melamine resin: "CYMEL 370N" manufactured by Nihon Cytec Industries Inc.
- Silane coupling agent: "KBM-403" manufactured by Shin-Etsu Chemical Co., Ltd.

### <Preparation of Crosslinkable Fine Particles (B)>

A monomer solution obtained by dissolving 70 parts by mass of N-methylolacrylamide and 30 parts by mass of methoxypolyethylene glycol monomethacrylate (a polyethylene chain having a number of repeating units: 90) in 200 parts by mass of methoxypropanol and a solution obtained by dissolving 1 part by mass of "ACVA" (manufactured by Otsuka Chemical Co., Ltd., an azo-based initiator) in 50 parts by mass of methoxypropanol were separately added dropwise to 150 parts by mass of methoxypropanol in a nitrogen atmosphere at 105°C over 3 hours, and the mixture was further heated and stirred for 1 hour for polymerization, thereby obtaining crosslinkable fine particles (B). In the obtained dispersion liquid, the average particle diameter of the crosslinkable fine particles were 250 nm.

### <Example 1>

### [Preparation of Aqueous Resin Dispersion (A)]

A flask equipped with a stirrer, a condenser, a temperature controller, and two dropping funnels was charged with an ethylene-vinyl alcohol copolymer (EVOH) (A1) having an ethylene ratio of 25 mol% in a pellet form and a mixed solution of water and methanol (water:methanol = 1:1 in a mass ratio) in an amount 9 times the mass of the copolymer, heated to 75°C, and stirred for 1 hour or more to obtain a dissolution solution of the EVOH (A1).

Then, a methanol solution of itaconic acid and acrylic acid as the monomers of the radical polymer (A2) and an aqueous 0.6% by mass ammonium persulfate solution were respectively transferred to separate dropping funnels and added dropwise to the solution of the EVOH (A1) under a nitrogen atmosphere. At this time, the solution temperature was held at 75°C, the solutions were added dropwise over 30 minutes, and after dropwise addition, the mixed solution was continued to stir at the same temperature for 2 hours.

Then, aqueous ammonia of carboxylic acid equivalents (which was diluted with the same amount of methanol as the amount of water in aqueous ammonia) was added dropwise for about 20 minutes for neutralization. After neutralization, a condenser for solvent removal was attached to the flask, which was heated while supplying water to distill off methanol, thereby changing the medium to water. Thereafter, the mixture was cooled and filtered to obtain an aqueous resin dispersion (A) .

The aqueous resin dispersion (A) was prepared such that the mass ratio of the solid content (unit: parts by mass) of the ethylene-vinyl alcohol copolymer (A1) as well as the itaconic acid and the acrylic acid as the monomers of the radical polymer (A2) was the ratio shown in Table 1.

### [Preparation of Hydrophilization Treatment Agent]

The aqueous resin dispersion (A) obtained above, the crosslinkable fine particles (B), JEFFAMINE ED-600 as the polyetheramine (C), and the melamine resin (product name: CYMEL 370N manufactured by Nihon Cytec Industries Inc.) as the cross-linking agent (E) were mixed such that the mass ratio of the solid content (unit: parts by mass) in the solid content of the finally obtained hydrophilization treatment agent was the ratio shown in Table 1, thereby obtaining a hydrophilization treatment agent. That is, the solid content in the hydrophilization treatment agent obtained in Example 1 was 117 parts by mass in total.

### [Fabrication of Test Plate]

### (Degreasing Treatment Step)

A 1000 series aluminum material with 150 mm × 70 mm × 0.8 mm was prepared and subjected to degreasing treatment at 70°C for 5 seconds with a 1% solution of Surfcleaner EC370 manufactured by Nippon Paint Co., Ltd.

### (Chemical Conversion Coating Film Formation Step)

Subsequently, the material was subjected to phosphoric acid chromate treatment at 40°C for 5 seconds with a 10% solution of Alsurf 407/47 manufactured by Nippon Paint Co., Ltd. to form a chemical conversion coating film.

### (Hydrophilic Coating Film Formation Step)

Then, the hydrophilization treatment agent prepared above was prepared to have a solid content of 6%, which was applied to the aluminum material having the chemical conversion coating film obtained above by immersion, and the aluminum material was heated at 160°C for 10 minutes and dried to fabricate a test plate. The amount of the hydrophilization treatment agent applied was controlled such that the hydrophilic coating film after drying was 1 g/m².

**[Table 1]**

| | | | | | Example1 | Example2 | Examples | Example4 | Examples | Example6 | Example7 |
|---|---|---|---|---|---|---|---|---|---|---|---|
| Hydrophilization treatment agent | (A) Aqueous resin dispersion | (A1) | EVOH | Ethylene ratio 25mol% | 15 | 40 | 30 | 40 | 42 | - | - |
| | | | | Ethylene ratio 32mol% | - | - | - | - | - | - | 20 |
| | | | | Ethylene ratio 44mol% | - | - | - | - | - | 30 | - |
| | | (A2-1) | Radically polymerizable carboxylic acid monomer | Itaconic acid | 10 | 15 | - | - | 8 | 10 | 15 |
| | | | | Acrylic acid | 25 | 25 | 30 | 15 | 10 | 20 | 20 |
| | | | | Methacrylic acid | - | - | - | 15 | - | 10 | - |
| | | (A1)/(A2) | | | 0.43 | 1.00 | 1.00 | 1.33 | 2.33 | 0.75 | 0.57 |
| | (B) Crosslinkable fine particles | | | | 50 | 20 | 40 | 30 | 40 | 30 | 45 |
| | (B)/(A) | | | | 1.00 | 0.25 | 0.67 | 0.43 | 0.67 | 0.43 | 0.82 |
| | (C) Polyetheramine | | | ED-600 | 15 | 30 | 15 | 15 | 15 | 15 | 15 |
| | | | | ED-900 | - | - | - | - | - | - | - |
| | | | | ED-2003 | - | - | - | - | - | - | - |
| | Polyether | | | PEG | - | - | - | - | - | - | - |
| | (C)/((A)+(B)) | | | | 0.15 | 0.30 | 0.15 | 0.15 | 0.15 | 0.15 | 0. 15 |
| | (E) Cross-linking agent | | | Melamine resin | 2 | 2 | 2 | 2 | 2 | 2 | 2 |
| | (E)/((A)+(B)+(C)) | | | | 0.02 | 0.02 | 0.02 | 0.02 | 0.02 | 0.02 | 0.02 |
| Total (parts by mass) | | | | | 117 | 132 | 117 | 117 | 117 | 117 | 117 |
| Initial hydrophilicity | | | | | 4 | 4 | 4 | 4 | 4 | 4 | 4 |
| Hydrophilic durability | | | | | 4 | 3 | 4 | 4 | 4 | 4 | 4 |
| WET Adhesion | | | | | 4 | 4 | 4 | 4 | 4 | 4 | 4 |
| Water droplet removal properties | | | | Sliding angle | 4 | 4 | 4 | 4 | 4 | 4 | 4 |
| | | | | Draining properties | ○ | ○ | ○ | ○ | ○ | ○ | ○ |
| Durability of water droplet removal properties | | | | Sliding angle | 3 | 3 | 4 | 4 | 3 | 4 | 4 |
| | | | | Draining properties | ○ | ○ | ○ | ○ | ○ | ○ | ○ |

### <Example 2 to Example 27>

### [Preparation of Aqueous Resin Dispersion (A)]

Each aqueous resin dispersion (A) was prepared in the same manner as Example 1 such that the mass ratio of the solid content (unit: parts by mass) in the solid content in the aqueous resin dispersion (A) was the ratio shown in Table 1 to Table 3.

### [Preparation of Hydrophilization Treatment Agent]

Each hydrophilization treatment agent was prepared using the aqueous resin dispersion (A) obtained, the crosslinkable fine particles (B), and the polyetheramine (C) and the cross-linking agent (E) each shown in Table 1 to Table 3 such that the mass ratio of the solid content (unit: parts by mass) in the solid content of the hydrophilization treatment agent was the ratio shown in Table 1 to Table 3.

**[Table 2]**

| | | | | | Example8 | Example9 | Example10 | Example11 | Example12 | Example13 | Example14 | Example15 | Example16 | Example17 | Example18 |
|---|---|---|---|---|---|---|---|---|---|---|---|---|---|---|---|
| | (A) Aqueous resin dispersion | (A1) | EVOH | Ethylene ratio 25mol% | - | - | - | - | - | - | - | - | - | - | - |
| | | | | Ethylene ratio 32mol% | 23 | 14 | - | 20 | 20 | 20 | 20 | 20 | 20 | 20 | 20 |
| | | | | Ethylene ratio 44mol% | - | - | 20 | - | - | - | - | - | - | - | - |
| | | (A2-1) | Radically polymerizable carboxylic acid monomer | Itaconic acid | 23 | 14 | 20 | 20 | 15 | 15 | 15 | 15 | 15 | 15 | 15 |
| | | | | Acrylic acid | 23 | 14 | 20 | - | 20 | 20 | 20 | 20 | 20 | 20 | 20 |
| | | | | Methacrylic acid | - | - | - | 20 | - | - | - | - | - | - | - |
| | | (A1)/(A2) | | | 0.50 | 0.50 | 0.50 | 0.50 | 0.57 | 0.57 | 0.57 | 0.57 | 0.57 | 0.57 | 0.57 |
| | (B) Crosslinkable fine particles | | | | 23 | 60 | 40 | 45 | 45 | 45 | 40 | 40 | 45 | 45 | 45 |
| | (B)/(A) | | | | 0.33 | 1.43 | 0.67 | 0.75 | 0.82 | 0.82 | 0.73 | 0.73 | 0.82 | 0.82 | 0.82 |
| Hydrophilization treatment agent | | | | ED-600 | 23 | 13 | 10 | 40 | - | - | 10 | 10 | - | - | - |
| | | | | ED-900 | - | - | - | - | 15 | - | - | - | - | - | - |
| | | | | ED-2003 | - | - | - | - | - | 15 | - | - | - | - | - |
| | (C) Polyetheramine | | | M-1000 | - | - | - | - | - | - | 10 | - | - | - | - |
| | | | | M-2070 | - | - | - | - | - | - | - | 10 | - | - | - |
| | | | | PEGPA-400 | - | - | - | - | - | - | - | - | 15 | - | - |
| | | | | PEGPA-1000 | - | - | - | - | - | - | - | - | - | 15 | - |
| | | | | PEGPA-2000 | - | - | - | - | - | - | - | - | - | - | 15 |
| | Polyether | | | PEG | - | - | - | - | - | - | - | - | - | - | - |
| | (C)/((A)+(B)) | | | | 0.25 | 0.13 | 0.10 | 0.38 | 0.15 | 0.15 | 0.21 | 0.21 | 0.15 | 0.15 | 0.15 |
| | (E) Cross-linking agent | | | Melamine resin | 2 | 2 | 2 | 2 | 2 | 2 | 2 | 2 | 2 | 2 | 2 |
| | (E)/((A)+(B)+(C)) | | | | 0.02 | 0.02 | 0.02 | 0.01 | 0.02 | 0.02 | 0.02 | 0.02 | 0.02 | 0.02 | 0.02 |
| Total (parts by mass) | | | | | 117 | 117 | 112 | 147 | 117 | 117 | 117 | 117 | 117 | 117 | 117 |
| Initial hydrophilicity | | | | | 4 | 4 | 4 | 4 | 4 | 4 | 4 | 4 | 4 | 4 | 4 |
| Hydrophilic durability | | | | | 4 | 4 | 3 | 4 | 4 | 4 | 4 | 4 | 4 | 4 | 4 |
| WET Adhesion | | | | | 4 | 4 | 4 | 3 | 4 | 4 | 4 | 4 | 4 | 4 | 4 |
| Water droplet removal properties | | | | Sliding angle | 4 | 4 | 4 | 4 | 4 | 4 | 4 | 4 | 4 | 4 | 4 |
| | | | | Draining properties | ○ | ○ | ○ | ○ | ○ | ○ | ○ | ○ | ○ | ○ | ○ |
| Durability of water droplet removal properties | | | | Sliding angle | 4 | 4 | 3 | 4 | 4 | 4 | 4 | 4 | 4 | 4 | 4 |
| | | | | Draining properties | ○ | ○ | ○ | ○ | ○ | ○ | ○ | ○ | ○ | ○ | ○ |

**[Table 3]**

| | | | | | Example19 | Example20 | Example21 | Example22 | Example23 | Example24 | Example25 | Example26 | Example27 |
|---|---|---|---|---|---|---|---|---|---|---|---|---|---|
| | | (A1) | EVOH | Ethylene ratio 25mol% | 15 | - | - | 10 | - | - | - | - | 20 |
| | | | | Ethylene ratio 32mol% | - | 25 | - | - | 20 | - | 20 | 20 | - |
| | | | | Ethylene ratio 44mol% | - | - | 25 | 10 | - | 20 | - | - | - |
| | | (A2-1) | Radically polymerizable carboxylic acid monomer | Itaconic acid | 10 | 15 | 15 | 15 | 15 | 15 | 15 | 15 | 15 |
| | | | | Acrylic acid | 10 | 15 | 15 | 20 | 20 | 20 | 20 | 20 | 20 |
| | | | | Methacrylic acid | - | - | - | - | - | - | - | - | - |
| | (A) Aqueous resin dispersion | (A2-2 ) | Radically polymerizable sulfonic acid monomer | HAPS | 25 | - | - | - | - | - | - | - | - |
| | | | | AMPS | - | 15 | - | - | - | - | - | - | - |
| | | | | SEMA | - | | 15 | - | - | - | - | - | - |
| | | (A2-3) | Radically polymerizable monomer | In formula (II), p = | - | - | - | 5 | - | - | - | - | - |
| | | | | In formula (II), p = | - | - | - | - | 5 | - | - | - | - |
| | | | | NVF | - | - | - | - | - | 5 | - | - | - |
| | | | | AAm | - | - | - | - | - | - | 5 | - | - |
| | | | | DMAA | | | | | - - | - - | - - | - 5 | |
| | | | | GMA | - | - | - | - | - | - | - | - | 5 |
| | | (A1)/(A2) | | | 0.33 | 0.56 | 0.56 | 0.50 | 0.50 | 0.50 | 0.50 | 0.50 | 0.50 |
| | (B) Crosslinkable fine particles | | | | 30 | 35 | 35 | 35 | 35 | 35 | 40 | 40 | 40 |
| | (B) / (A) | | | | 0.50 | 0.50 | 0.50 | 0.58 | 0.58 | 0.58 | 0.67 | 0.67 | 0.67 |
| Hydrophilization treatment agent | (C) Polyetheramine | | | ED-600 | 15 | 10 | 10 | 15 | 15 | 15 | 15 | 15 | 15 |
| | | | | ED-900 | - | - | - | - | - | - | - | - | - |
| | | | | ED-2003 | - | - | - | - | - | - | - | - | - |
| | Polyether | | | PEG | - | - | - | - | - | - | - | - | - |
| | (C)/((A)+(B)) | | | | 0.17 | 0.10 | 0.10 | 0.16 | 0.16 | 0.16 | 0.15 | 0.15 | 0.15 |
| | (E) Cross-linking agent Melamine resin | | | | 2 | 2 | 2 | 2 | 2 | 2 | 2 | 2 | 2 |
| | (E)/((A)+(B)+(C)) | | | | 0.02 | 0.02 | 0.02 | 0.02 | 0.02 | 0.02 | 0.02 | 0.02 | 0.02 |
| Total (parts by mass) | | | | | 107 | 117 | 117 | 112 | 112 | 112 | 117 | 117 | 117 |
| Initial hydrophilicity | | | | | 4 | 4 | 4 | 4 | 4 | 4 | 4 | 4 | 4 |
| Hydrophilic durability | | | | | 4 | 4 | 4 | 4 | 4 | 4 | 4 | 4 | 4 |
| WET Adhesion | | | | | 4 | 4 | 4 | 4 | 4 | 4 | 4 | 4 | 4 |
| Water droplet removal properties | | | | Sliding angle | 4 | 4 | 4 | 4 | 4 | 4 | 4 | 4 | 4 |
| | | | | Draining properties | ○ | ○ | ○ | ○ | ○ | ○ | ○ | ○ | ○ |
| Durability of water droplet removal properties | | | | Sliding angle | 4 | 4 | 4 | 4 | 4 | 4 | 4 | 4 | 4 |
| | | | | Draining properties | ○ | ○ | ○ | ○ | ○ | ○ | ○ | ○ | ○ |

### <Example 28 to Example 29>

### [Preparation of Aqueous Resin Dispersion (A)]

A flask equipped with a stirrer, a condenser, a temperature controller, and two dropping funnels was charged with an ethylene-vinyl alcohol copolymer (EVOH) (A1) having an ethylene ratio of 25 mol% in a pellet form and a mixed solution of water and methanol (water:methanol = 1:1 in a mass ratio) in an amount 9 times the mass of the copolymer, heated to 75°C, and stirred for 1 hour or more to obtain a dissolution solution of the EVOH (A1).

Subsequently, a hydrophilic compound (A3) was added to the dissolution solution of the EVOH (A1) obtained and stirred at 75°C for 1 hour or more to obtain a dissolution solution in which the EVOH (A1) and the hydrophilic compound (A3) were dissolved.

Subsequently, each aqueous resin dispersion (A) was prepared in the same manner as Example 1, by subjecting the dissolution solution to radical copolymerization such that the mass ratio of the solid content (unit: parts by mass) in the solid content in the aqueous resin dispersion (A) was the ratio shown in Table 4.

### [Preparation of Hydrophilization Treatment Agent]

Each hydrophilization treatment agent was prepared using the aqueous resin dispersion (A) obtained, the crosslinkable fine particles (B), and the polyetheramine (C) and the cross-linking agent (E) each shown in Table 4 such that the mass ratio of the solid content (unit: parts by mass) in the solid content of the hydrophilization treatment agent was the ratio shown in Table 4.

**[Table 4]**

| | | | | | Example28 | Example29 | Example30 |
|---|---|---|---|---|---|---|---|
| Hydrophilization treatment agent | (A) Aqueous resin dispersion | (A1) | EVOH | Ethylene ratio 25mol% | - | 20 | - |
| | | | | Ethylene ratio 32mol% | - | - | 20 |
| | | | | Ethylene ratio 44mol% | 20 | - | - |
| | | (A2-1) | Radically polymerizable carboxylic acid monomer | Itaconic acid | 15 | 15 | 15 |
| | | | | Acrylic acid | 20 | 20 | 20 |
| | | | | Methacrylic acid | - | - | - |
| | | (A3) | Hydrophilic c | PEG | 5 | - | - |
| | | | | PEG | - | 5 | - |
| | | | | EO-PVA | - | - | 5 |
| | | (A1)/(A2) | | | 0.57 | 0.57 | 0.57 |
| | (B) Crosslinkable fine particles | | | | 40 | 40 | 40 |
| | (B) / (A) | | | | 0.67 | 0.67 | 0.67 |
| | (C) Polyetheramine | | | ED-600 | 15 | 15 | 15 |
| | | | | ED-900 | - | - | - |
| | | | | ED-2003 | - | - | - |
| | Polyether | | | PEG | - | - | - |
| | (C)/((A)+(B)) | | | | 0.15 | 0.15 | 0.15 |
| | (E) Cross-linking agent | | | Melamine resin | 2 | 2 | 2 |
| | (E)/((A)+(B)+(C)) | | | | 0.02 | 0.02 | 0.02 |
| Total (parts by mass) | | | | | 117 | 117 | 117 |
| Initial hydrophilicity | | | | | 4 | 4 | 4 |
| Hydrophilic durability | | | | | 4 | 4 | 4 |
| WET Adhesion | | | | | 4 | 4 | 4 |
| Water droplet removal properties | | | | Sliding angle | 4 | 4 | 4 |
| | | | | Draining properties | ○ | ○ | ○ |
| Durability of water droplet removal properties | | | | Sliding angle | 4 | 4 | 4 |
| | | | | Draining properties | ○ | ○ | ○ |

### <Example 30>

### [Preparation of Aqueous Resin Dispersion (A)]

A flask equipped with a stirrer, a condenser, a temperature controller, and two dropping funnels was simultaneously charged with an ethylene-vinyl alcohol copolymer (EVOH) (A1) having an ethylene ratio of 25 mol% in a pellet form and a hydrophilic compound (A3), a mixed solution of water and methanol (water:methanol = 1:1 in a mass ratio) in an amount 9 times the mass of the copolymer was added thereto, and the mixture was heated to 75°C and stirred for 1 hour or more to obtain a dissolution solution in which the EVOH (A1) and the hydrophilic compound (A3) were dissolved.

Subsequently, the aqueous resin dispersion (A) was prepared in the same manner as Example 1, by subjecting the dissolution solution to radical copolymerization such that the mass ratio of the solid content (unit: parts by mass) in the solid content in the aqueous resin dispersion (A) was the ratio shown in Table 4.

### [Preparation of Hydrophilization Treatment Agent]

The hydrophilization treatment agent was prepared using the aqueous resin dispersion (A) obtained, the crosslinkable fine particles (B), and the polyetheramine (C) and the cross-linking agent (E) each shown in Table 4 such that the mass ratio of the solid content (unit: parts by mass) in the solid content of the hydrophilization treatment agent was the ratio shown in Table 4.

### <Example 31 to Example 40>

### [Preparation of Aqueous Resin Dispersion (A)]

### [Preparation of Aqueous Resin Dispersion (A)]

Each aqueous resin dispersion (A) was prepared in the same manner as Example 1 such that the mass ratio of the solid content (unit: parts by mass) in the solid content in the aqueous resin dispersion (A) was the ratio shown in Table 5.

### [Preparation of Hydrophilization Treatment Agent]

Each hydrophilization treatment agent was prepared using the aqueous resin dispersion (A) obtained, the crosslinkable fine particles (B), and the polyetheramine (C), the hydrophilic compound (D), and the cross-linking agent (E) each shown in Table 5 such that the mass ratio of the solid content (unit: parts by mass) in the solid content of the hydrophilization treatment agent was the ratio shown in Table 5.

**[Table 5]**

| | | | | | Example31 | Example32 | Example33 | Example34 | Example35 | Example36 | Example37 | Example38 | Example39 | Example40 |
|---|---|---|---|---|---|---|---|---|---|---|---|---|---|---|
| | (A) Aqueous resin dispersion | (A1) | EVOH | Ethylene ratio 25mol $ | - | 20 | - | - | 20 | - | - | 20 | - | - |
| | | | | Ethylene ratio 32mol% | - | - | 20 | - | - | 20 | - | - | 20 | - |
| | | | | Ethylene ratio 44mol% | 20 | - | - | 20 | - | - | 20 | - | - | 20 |
| | | (A2-1) | Radically polymerizable carboxylic acid monomer | Itaconic acid | 15 | 15 | 15 | 15 | 15 | 15 | 15 | 15 | 15 | 15 |
| | | | | Acrylic acid | 20 | 20 | 20 | 20 | 20 | 20 | 20 | 20 | 20 | 20 |
| | | | | Methacrylic acid | - | - | - | - | - | - | - | - | - | - |
| | | (A1)/(A2) | | | 0.57 | 0.57 | 0.57 | 0.57 | 0.57 | 0.57 | 0.57 | 0.57 | 0.57 | 0.57 |
| | (B) Crosslinkable fine particles | | | | 40 | 40 | 40 | 40 | 40 | 40 | 40 | 40 | 40 | 40 |
| | (B) / (A) | | | | 0.73 | 0.73 | 0.73 | 0.73 | 0.73 | 0.73 | 0.73 | 0.73 | 0.73 | 0.73 |
| | (C) Polyetheramine | | | ED-600 | 15 | 15 | 15 | 15 | 15 | 15 | 15 | 15 | 15 | 15 |
| | | | | ED-900 | - | - | - | - | - | - | - | - | - | - |
| | | | | ED-2003 | - | - | - | - | - | - | - | - | - | - |
| Hydrophilization treatment agent | Polyether | | | PEG | - | - | - | - | - | - | - | - | - | - |
| | (C)/((A)+(B)) | | | | 0.16 | 0.16 | 0.16 | 0.16 | 0.16 | 0.16 | 0.16 | 0.16 | 0.16 | 0.16 |
| | (D) Hydrophilic compound | | | EO-PVA | 15 | - | - | - | - | - | - | - | - | - |
| | | | | PVA | - | 5 | - | - | - | - | - | - | - | - |
| | | | | PAA | - | - | 5 | - | - | - | - | - | - | - |
| | | | | CMC | - | - | - | 5 | - | - | - | - | - | - |
| | | | | PVP | - | - | - | - | 5 | - | - | - | - | - |
| | | | | PEG | - | - | - | - | - | 5 | - | - | - | - |
| | | | | NMAM | - | - | - | - | - | - | 5 | - | - | - |
| | | | | PNVF | - | - | - | - | - | - | - | 5 | | - |
| | | | | Acrylic acid | - | - | - | - | - | - | - | - | 5 | - |
| | | | | Sulfonic acid | - | - | - | - | - | - | - | - | - | 5 |
| | (D)/((A)+(B)+^{©}) | | | | 0.14 | 0.05 | 0.05 | 0.05 | 0.05 | 0.05 | 0.05 | 0.05 | 0.05 | 0.05 |
| | (E) Cross-linking agent | | | Melamine resin | 2 | 2 | 2 | 2 | 2 | 2 | 2 | 2 | 2 | 2 |
| | (E)/((A)+(B)+(C)) | | | | 0.02 | 0.02 | 0.02 | 0.02 | 0.02 | 0.02 | 0.02 | 0.02 | 0.02 | 0.02 |
| Total (parts by mass) | | | | | 127 | 117 | 117 | 117 | 117 | 117 | 117 | 117 | 117 | 117 |
| Initial hydrophilicity | | | | | 4 | 4 | 4 | 4 | 4 | 4 | 4 | 4 | 4 | 4 |
| Hydrophilic durability | | | | | 4 | 4 | 4 | 4 | 4 | 4 | 4 | 4 | 4 | 4 |
| WET Adhesion | | | | | 4 | 4 | 4 | 4 | 4 | 4 | 4 | 4 | 4 | 4 |
| Water droplet removal properties | | | | Sliding angle | 4 | 4 | 4 | 4 | 4 | 4 | 4 | 4 | 4 | 4 |
| | | | | Draining properties | ○ | ○ | ○ | ○ | ○ | ○ | ○ | ○ | ○ | ○ |
| Durability of water droplet removal properties | | | | Sliding angle | 4 | 4 | 4 | 4 | 4 | 4 | 4 | 4 | 4 | 4 |
| | | | | Draining properties | ○ | ○ | ○ | ○ | ○ | ○ | ○ | ○ | ○ | ○ |

### <Example 41 to Example 44, Comparative Examples 1 to 6>

### [Preparation of Aqueous Resin Dispersion (A)]

Each aqueous resin dispersion (A) was prepared in the same manner as Example 1 such that the mass ratio of the solid content (unit: parts by mass) in the solid content in the aqueous resin dispersion (A) was the ratio shown in Table 6 and Table 7.

### [Preparation of Hydrophilization Treatment Agent]

Each hydrophilization treatment agent was prepared using the aqueous resin dispersion (A) obtained, the crosslinkable fine particles (B), and the polyetheramine (C) and the cross-linking agent (E) each shown in Table 6 and Table 7 such that the mass ratio of the solid content (unit: parts by mass) in the solid content of the hydrophilization treatment agent was the ratio shown in Table 6 and Table 7.

**[Table 6]**

| | | | | | Example41 | Example42 | Example43 | Example44 |
|---|---|---|---|---|---|---|---|---|
| Hydrophilization treatment agent | (A) Aqueous resin dispersion | (A1) | EVOH | Ethylene ratio 25mol% | - | - | - | - |
| | | | | Ethylene ratio 32mol% | 20 | 20 | 20 | 20 |
| | | | | Ethylene ratio 44mol% | - | - | - | - |
| | | (A2-1) | Radically polymerizable carboxylic acid monomer | Itaconic acid | 15 | 15 | 15 | 15 |
| | | | | Acrylic acid | 20 | 20 | 20 | 20 |
| | | | | Methacrylic acid | - | - | - | - |
| | | (A1)/(A2) | | | 0.57 | 0.57 | 0.57 | 0.57 |
| | (B) Crosslinkable fine particles | | | | 40 | 40 | 40 | 40 |
| | (B)/(A) | | | | 0.73 | 0.73 | 0.73 | 0.73 |
| | (C) Polyetheramine | | | ED-600 | 15 | 15 | 15 | 15 |
| | | | | ED-900 | - | - | - | - |
| | | | | ED-2003 | - | - | - | - |
| | Polyether | | | PEG | - | - | - | - |
| | (C)/((A)+(B)) | | | | 0.16 | 0.16 | 0.16 | 0.16 |
| | (E) Cross-linking agent | | | Melamine resin | 11 | 2 | - | - |
| | | | | Silane coupling | - | 5 | 5 | - |
| | (E)/((A)+(B)+(C)) | | | | 0.10 | 0.06 | 0.05 | 0.00 |
| Total (parts by mass) | | | | | 121 | 117 | 115 | 110 |
| Initial hydrophilicity | | | | | 4 | 4 | 4 | 4 |
| Hydrophilic durability | | | | | 4 | 4 | 4 | 4 |
| WET Adhesion | | | | | 4 | 4 | 4 | 4 |
| Water droplet removal properties | | | | Sliding angle | 4 | 4 | 4 | 4 |
| | | | | Draining properties | ○ | ○ | ○ | ○ |
| Durability of water droplet removal properties | | | | Sliding angle | 4 | 4 | 4 | 4 |
| | | | | Draining properties | ○ | ○ | ○ | ○ |

**[Table 7]**

| | | | | | Comparative Example 1 | Comparative Example2 | Comparative Examples | Comparative Example4 | Comparative Example5 | Comparative Example6 |
|---|---|---|---|---|---|---|---|---|---|---|
| Hydrophilization treatment agent | (A) Aqueous resin dispersion | (A1) | EVOH | Ethylene ratio 25mol% | 60 | - | 40 | - | - | - |
| | | | | Ethylene ratio 32mol% | - | 12 | - | 22 | - | - |
| | | | | Ethylene ratio 44mol% | - | - | - | - | 25 | 25 |
| | | (A2-1) | Radically polymerizable carboxylic acid monomer | Itaconic acid | 10 | 12 | 30 | 22 | 25 | 25 |
| | | | | Acrylic acid | 10 | 12 | 30 | 22 | 25 | 25 |
| | | | | Methacrylic acid | - | - | - | - | - | - |
| | | (A1)/(A2) | | | 3.00 | 0.50 | 0.67 | 0.50 | 0.50 | 0.50 |
| | (B) Crosslinkable fine particles | | | | 20 | 72 | 0 | 45 | 25 | 20 |
| | (B)/(A) | | | | 0.25 | 2.00 | 0. 00 | 0.68 | 0.33 | 0.27 |
| | (C) Polyetheramine | | | ED-600 | 10 | 12 | 15 | 4 | - | - |
| | | | | ED-900 | - | - | - | - | - | - |
| | | | | ED-2003 | - | - | - | - | - | - |
| | Polyether | | | PEG | - | - | - | - | - | 15 |
| | (C)/((A)+(B)) | | | | 0.10 | 0.11 | 0.15 | 0.04 | 0.00 | 0.16 |
| | (E) Cross-linking agent | | | Melamine resin | 2 | 2 | 2 | 2 | 2 | 2 |
| | (E)/((A)+(B)+(C)) | | | | 0.02 | 0.02 | 0.02 | 0.02 | 0.02 | 0.02 |
| Total (parts by mass) | | | | | 112 | 122 | 117 | 117 | 102 | 112 |
| Initial hydrophilicity | | | | | 2 | 4 | 3 | 4 | 4 | 4 |
| Hydrophilic durability | | | | | 1 | 4 | 3 | 4 | 4 | 4 |
| WET Adhesion | | | | | 4 | 2 | 2 | 4 | 4 | 3 |
| Water droplet removal properties | | | | Sliding angle | 3 | 3 | 2 | 3 | 2 | 2 |
| | | | | Draining properties | ○ | × | ○ | ○ | ○ | × |
| Durability of water droplet removal properties | | | | Sliding angle | 2 | 2 | 1 | 2 | 2 | 2 |
| | | | | Draining properties | ○ | × | ○ | ○ | ○ | × |

### <Evaluation>

The following evaluations were carried out for each test plate obtained.

### [Initial Hydrophilicity]

The contact angle of a water droplet to each test plate was evaluated. The water contact angle was measured with an automatic contact angle meter (model number: DSA20E, manufactured by KRUSS). The measured contact angle is the contact angle between the test plate and the water droplet at room temperature 30 seconds after dropping. The evaluation results are shown in Tables 1 to 5. When the contact angle is 30° or less, the initial hydrophilicity is considered to be good. Evaluation criteria are shown below.

### (Evaluation Criteria)

4: 20° or less
3: more than 20° and 30° or less
2: more than 30° and 50° or less
1: more than 50°

### [Hydrophilic Durability]

Each test plate was immersed in pure water for 240 hours, lifted, and dried. Subsequently, the water contact angle between each dried test plate and a water droplet was measured. The contact angle was measured with an automatic contact angle meter (model number: DSA20E, manufactured by KRUSS). The measured contact angle is the contact angle between the test plate and the water droplet at room temperature 30 seconds after dropping. The evaluation results are shown in Tables 1 to 5. When the water contact angle is 40° or less, the hydrophilic durability is considered to be good.

### (Evaluation Criteria)

4: 30° or less
3: more than 30° and 40° or less
2: more than 40° and 50° or less
1: more than 50°

### [WET Adhesion]

Pure water was sprayed on each test plate, and the coating film was rubbed while applying a load of 500 g thereon. Rubbing was performed up to 10 times by taking one reciprocation as once, and the number of times until the base of the test plate was exposed was evaluated. The evaluation results are shown in Tables 1 to 5. When the number of times until the base of the test plate is exposed is 7 times or more, the WET adhesion is considered to be good.

### (Evaluation Criteria)

4: The hydrophilic coating film is not stripped in 10 times of sliding
3: The hydrophilic coating film is stripped in 7 or more and less than 10 times of sliding
2: The hydrophilic coating film is stripped in 3 or more and less than 7 times of sliding
1: The hydrophilic coating film is stripped in less than 3 times of sliding

### [Water Droplet Removal Properties: Sliding Angle]

As the evaluation of the water droplet removal properties, the sliding angle of a water droplet to the coating film formed was evaluated. Specifically, a water droplet of 10 µL was dropped on a test plate on which a coating film was formed with an automatic contact angle meter (model number: DMO-701, manufactured by Kyowa Interface Science Co., Ltd.) at room temperature, and after 1 second after dropping, the test plate was gradually inclined at a rate of 1°/second and the angle at which the water droplet was fallen (sliding angle of water) was measured. Evaluation criteria are shown below, and the evaluation results are shown in Tables 1 to 5.

### (Evaluation Criteria)

4: 15° or less
3: more than 15° and30° or less
2: more than 30° and 60° or less
1: more than 60°

### [Water Droplet Removal Properties: Draining Properties]

After the above sliding angle was measured, the trajectory through which the slid and fallen water droplet had passed was visually observed, and the remaining of water was evaluated based on the following evaluation criteria. The evaluation results are shown in Tables 1 to 5.

### (Evaluation Criteria)

Good (indicated by circle symbol (o)): the water droplet is flown down without leaving any water spots
Poor (indicated by cross symbol (x)): the water droplet is flown down while leaving water spots

### [Durability of Water Droplet Removal Properties: Sliding Angle]

The test plate on which a coating film having hydrophilicity and slipperiness was formed was immersed in pure water for 100 hours, lifted, and dried. Subsequently, the sliding angle of the water droplet was measured for the dried test plate in the same manner as above. Evaluation criteria are the same as above and the evaluation results are shown in Tables 1 to 5.

### [Water Droplet Removal Properties: Draining Properties]

After the sliding angle with respect to the above durability of water droplet removal properties was measured, the draining properties were evaluated using the same evaluation criteria. The evaluation results are shown in Table 1 to 5.

## Claims

1. A hydrophilization treatment agent comprising:
an aqueous resin dispersion (A);
crosslinkable fine particles (B); and
a polyetheramine (C),
wherein the aqueous resin dispersion (A) comprises an ethylene-vinyl alcohol copolymer (A1) and a radical polymer (A2) having a structural unit derived from a radically polymerizable carboxylic acid monomer (A2-1), as a resin solid content;
a mass ratio of the ethylene-vinyl alcohol copolymer (A1) to a mass of the radical polymer (A2), ((A1)/(A2)), is 0.43 to 2.33;
the crosslinkable fine particles (B) are resin particles consisting of a copolymer obtained by copolymerizing monomer components consisting of a monomer (b1) represented by the following formula (I), a monomer (b2) having a polyoxyalkylene chain and a polymerizable double bond, and an additional polymerizable monomer (b3): 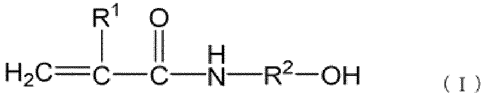
wherein R¹ is hydrogen or a methyl group and R² is CH₂ or C₂H_{4;}
a mass ratio of the crosslinkable fine particles (B) to a total mass of the resin solid content of the aqueous resin dispersion (A), ((B)/(A)), is 0.11 to 1.43;
the polyetheramine (C) is a compound having a polyether chain in the main chain and an amino group on the terminal, and is polyether monoamine represented by the following formula (IV-1) or polyether diamine represented by the following formula (IV-2) : 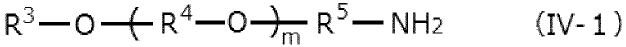
wherein R³ is a methyl or ethyl group, -(R⁴-O)- is a repeat unit derived from ethylene oxide, R⁴ being C₂H₄, a repeat unit derived from propylene oxide, R⁴ being C₃H₆, or a unit in which these coexist, and m is 1 to 100, 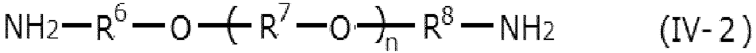
wherein R⁶ is CH₂, C₂H₄, or C₃H₆, R⁸ is CH₂, C₂H₄, C₃H₆, or C₄H₈, - (R⁷-O)- is a repeat unit derived from ethylene oxide, R⁷ being C₂H₄, a repeat unit derived from propylene oxide, R⁷ being C₃H₆, or a repeat unit in which these coexist, and n is 1 to 100;_and
a mass ratio of the polyetheramine (C) to a total mass of the resin solid content of the aqueous resin dispersion (A) and the crosslinkable fine particles (B), ((C)/((A)+(B))), is 0.1 to 0.38.

2. The hydrophilization treatment agent according to claim 1, wherein the radical polymer (A2) further has a structural unit derived from at least one monomer selected from the group consisting of a radically polymerizable sulfonic acid monomer (A2-2) and a radically polymerizable monomer having neither a carboxylic acid group nor a sulfonic acid group (A2-3).

3. The hydrophilization treatment agent according to claim 1 or 2, wherein the aqueous resin dispersion (A) further comprises a hydrophilic compound (A3) as the resin solid content, the hydrophilic compound (A3) is at least one selected from the group consisting of compounds having a structure represented by the following formula (III) and compounds having a polyvinyl pyrrolidone (PVP) structure:
R¹²O(CH₂CH₂O)_{q}- (III)
wherein R¹² is hydrogen or a methyl group, and q is an integer of 2 to 100,000.

4. The hydrophilization treatment agent according to any one of claims 1 to 3, further comprising a hydrophilic compound (D),
wherein the hydrophilic compound (D) is a resin having a hydrophilic group,
the hydrophilic group is a carboxylic acid group, a sulfonic acid group, or a hydroxyl group, and
wherein a mass ratio of the hydrophilic compound (D) to a total mass of the resin solid content of the aqueous resin dispersion (A), the crosslinkable fine particles (B), and the polyetheramine (C), ((D)/((A)+(B)+(C))), is 0.14 or less.

5. The hydrophilization treatment agent according to any one of claims 1 to 4, further comprising a cross-linking agent (E),
wherein a mass ratio of the cross-linking agent (E) to the total mass of the resin solid content of the aqueous resin dispersion (A), the crosslinkable fine particles (B), and the polyetheramine (C), ((E)/((A)+(B)+(C))), is 0.10 or less.

6. The hydrophilization treatment agent according to any one of claims 1 to 5, wherein in the aqueous resin dispersion (A), the radical polymer (A2) is obtained by radical (co)polymerization in a solution containing the ethylene-vinyl alcohol copolymer (A1).

7. A method for forming a hydrophilic coating film, comprising a hydrophilic coating film formation step of forming a hydrophilic coating film by bringing the hydrophilization treatment agent according to any one of claims 1 to 6 into contact with a surface of a base material.

## Patentansprüche

1. Ein Mittel zur Hydrophilierungsbehandlung, umfassend:
eine wässrige Harzdispersion (A);
vernetzbare feine Partikel (B); und
ein Polyetheramin (C),
wobei die wässrige Harzdispersion (A) ein Ethylen-Vinylalkohol-Copolymer (A1) und ein radikalisches Polymer (A2) mit einer Struktureinheit, die von einem radikalisch polymerisierbaren Carbonsäuremonomer (A2-1) abgeleitet ist, als Harzfeststoffgehalt umfasst;
ein Massenverhältnis des Ethylen-Vinylalkohol-Copolymers (A1) zur Masse des radikalischen Polymers (A2), ((A1)/(A2)), 0,43 bis 2,33 beträgt;
die vernetzbaren feinen Teilchen (B) Harzteilchen sind, die aus einem Copolymer bestehen, das durch Copolymerisation von Monomerkomponenten erhalten wird, die aus einem Monomer (b1), das durch die folgende Formel (I) dargestellt wird, einem Monomer (b2) mit einer Polyoxyalkylenkette und einer polymerisierbaren Doppelbindung und einem zusätzlichen polymerisierbaren Monomer (b3) bestehen: 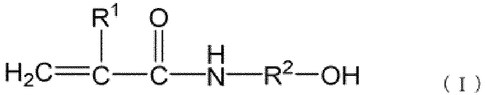
worin R¹ Wasserstoff oder eine Methylgruppe ist und R² CH₂ oder C₂H₄ ist_{;}
ein Massenverhältnis der vernetzbaren feinen Teilchen (B) zur Gesamtmasse des Harzfeststoffgehalts der wässrigen Harzdispersion (A), ((B)/(A)), 0,11 bis 1,43 beträgt;
das Polyetheramin (C) eine Verbindung mit einer Polyetherkette in der Hauptkette und einer Aminogruppe am Ende ist und ein Polyethermonoamin ist, das durch die folgende Formel (IV-1) dargestellt wird, oder ein Polyetherdiamin, das durch die folgende Formel (IV-2) dargestellt wird: 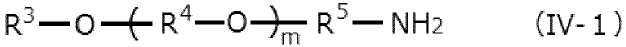
worin R³ eine Methyl- oder Ethylgruppe ist, -(R⁴-O)- eine sich wiederholende Einheit ist, die von Ethylenoxid abgeleitet ist, R⁴ C₂H₄ ist, eine sich wiederholende Einheit ist, die von Propylenoxid abgeleitet ist, R⁴ C₃H₆ ist, oder eine Einheit ist, in der diese nebeneinander bestehen, und m 1 bis 100 ist, 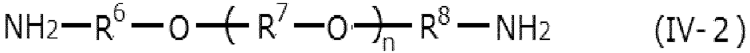
worin R⁶ CH₂ , C₂H₄ oder C₃H₆ ist, R⁸ CH₂ , C₂H₄ , C₃H₆ oder C₄H₈ ist, -(R⁷-O)- eine von Ethylenoxid abgeleitete Wiederholungseinheit ist, wobei R⁷ C₂H₄ ist, eine sich wiederholende Einheit, die sich von Propylenoxid ableitet, wobei R⁷ C₃H₆ ist, oder eine sich wiederholende Einheit, in der diese koexistieren, und n 1 bis 100 ist; und
ein Massenverhältnis des Polyetheramins (C) zur Gesamtmasse des Harzfeststoffgehalts der wässrigen Harzdispersion (A) und der vernetzbaren Feinteilchen (B), ((C)/((A)+(B))), 0,1 bis 0,38 beträgt.

2. Hydrophilisierendes Behandlungsmittel nach Anspruch 1, wobei das radikalische Polymer (A2) ferner eine Struktureinheit aufweist, die von mindestens einem Monomer abgeleitet ist, das aus der Gruppe ausgewählt ist, die aus einem radikalisch polymerisierbaren Sulfonsäuremonomer (A2-2) und einem radikalisch polymerisierbaren Monomer mit weder einer Carbonsäuregruppe noch einer Sulfonsäuregruppe (A2-3) besteht.

3. Hydrophilisierendes Behandlungsmittel nach Anspruch 1 oder 2, wobei die wässrige Harzdispersion (A) ferner eine hydrophile Verbindung (A3) als Harzfeststoffgehalt enthält,
die hydrophile Verbindung (A3) mindestens eine ist, die aus der Gruppe ausgewählt ist, die aus Verbindungen mit einer durch die folgende Formel (III) dargestellten Struktur und Verbindungen mit einer Polyvinylpyrrolidon (PVP)-Struktur besteht:
R¹²O(CH₂CH₂O)q- (III)
worin R¹² Wasserstoff oder eine Methylgruppe ist, und q eine ganze Zahl von 2 bis 100.000 ist.

4. Das Mittel zur Hydrophilierungsbehandlung nach einem der Ansprüche 1 bis 3, das ferner eine hydrophile Verbindung (D) enthält,
wobei die hydrophile Verbindung (D) ein Harz mit einer hydrophilen Gruppe ist,
die hydrophile Gruppe ist eine Carbonsäuregruppe, eine Sulfonsäuregruppe oder eine Hydroxylgruppe, und
worin das Massenverhältnis der hydrophilen Verbindung (D) zur Gesamtmasse des Harzfeststoffgehalts der wässrigen Harzdispersion (A), der vernetzbaren feinen Teilchen (B) und des Polyetheramins (C), ((D)/((A)+(B)+(C))), 0,14 oder weniger beträgt.

5. Das Mittel zur Hydrophilierungsbehandlung nach einem der Ansprüche 1 bis 4, das außerdem ein Vernetzungsmittel (E) enthält,
worin das Massenverhältnis des Vernetzungsmittels (E) zur Gesamtmasse des Harzfeststoffgehalts der wässrigen Harzdispersion (A), der vernetzbaren feinen Teilchen (B) und des Polyetheramins (C), ((E)/((A)+(B)+(C))), 0,10 oder weniger beträgt.

6. Hydrophilierungsmittel nach einem der Ansprüche 1 bis 5, **dadurch gekennzeichnet, dass** in der wässrigen Harzdispersion (A) das radikalische Polymer (A2) durch radikalische (Co)polymerisation in einer Lösung, die das Ethylen-Vinylalkohol-Copolymer (A1) enthält, erhalten wird.

7. Verfahren zur Bildung eines hydrophilen Beschichtungsfilms, das einen Schritt zur Bildung eines hydrophilen Beschichtungsfilms umfasst, bei dem ein hydrophiler Beschichtungsfilm gebildet wird, indem das Mittel zur Hydrophilierungsbehandlung nach einem der Ansprüche 1 bis 6 mit einer Oberfläche eines Grundmaterials in Kontakt gebracht wird.

## Revendications

1. Un agent de traitement d'hydrophilisation comprenant :
une dispersion aqueuse de résine (A) ;
des particules fines réticulables (B) ; et
une polyétheramine (C),
dans laquelle la dispersion aqueuse de résine (A) comprend un copolymère éthylène-alcool vinylique (A1) et un polymère radical (A2) dont l'unité structurelle est dérivée d'un monomère d'acide carboxylique polymérisable par voie radicalaire (A2-1), en tant que contenu solide de la résine ;
un rapport de masse du copolymère éthylène-alcool vinylique (A1) à une masse du polymère radical (A2), ((A1)/(A2)), est compris entre 0,43 et 2,33 ;
les particules fines réticulables (B) sont des particules de résine constituées d'un copolymère obtenu par copolymérisation de composants monomères constitués d'un monomère (b1) représenté par la formule suivante (I), d'un monomère (b2) ayant une chaîne polyoxyalkylène et une double liaison polymérisable, et d'un monomère polymérisable supplémentaire (b3) : 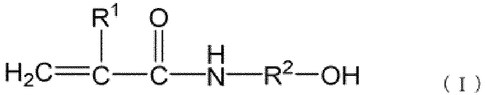
dans lequel R¹ est un hydrogène ou un groupe méthyle et R² est CH₂ ou C₂H_{4;}
le rapport de masse des particules fines réticulables (B) à la masse totale du contenu solide en résine de la dispersion aqueuse de résine (A), ((B)/(A)), est compris entre 0,11 et 1,43 ;
la polyétheramine (C) est un composé dont la chaîne principale est une chaîne de polyéther et dont la chaîne terminale est un groupe amino ; il s'agit d'une polyéther-monoamine représentée par la formule suivante (IV-1) ou d'une polyéther-diamine représentée par la formule suivante (IV-2) : 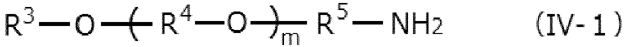
où R³ est un groupe méthyle ou éthyle, -(R⁴-O)- est une unité répétée dérivée de l'oxyde d'éthylène, R⁴ étant C₂H₄ , une unité répétée dérivée de l'oxyde de propylène, R⁴ étant C₃H₆ , ou une unité dans laquelle ces éléments coexistent, et m est compris entre 1 et 100, 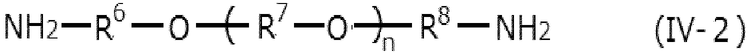
où R⁶ est CH₂ , C₂H₄ , ou C₃H₆ , R⁸ est CH₂ , C₂H₄ , C₃H₆ , ou C₄H₈, -(R⁷-O)- est une unité répétée dérivée de l'oxyde d'éthylène, R⁷ étant C₂H₄ , une unité répétée dérivée de l'oxyde de propylène, R⁷ étant C₃H₆ , ou une unité répétée dans laquelle ces éléments coexistent, et n est compris entre 1 et 100 ; et
le rapport en masse de la polyétheramine (C) à la masse totale du contenu solide de la résine de la dispersion aqueuse de résine (A) et des particules fines réticulables (B), ((C)/((A)+(B)), est compris entre 0,1 et 0,38.

2. Agent de traitement par hydrophilisation selon la revendication 1, dans lequel le polymère radical (A2) possède en outre une unité structurelle dérivée d'au moins un monomère choisi dans le groupe constitué d'un monomère d'acide sulfonique polymérisable par voie radicale (A2-2) et d'un monomère polymérisable par voie radicale n'ayant ni groupe acide carboxylique ni groupe acide sulfonique (A2-3).

3. Agent de traitement par hydrophilisation selon la revendication 1 ou 2, dans lequel la dispersion aqueuse de résine (A) comprend en outre un composé hydrophile (A3) en tant que contenu solide de la résine,
le composé hydrophile (A3) est au moins un composé choisi dans le groupe constitué par les composés ayant une structure représentée par la formule suivante (III) et les composés ayant une structure de polyvinylpyrrolidone (PVP) :
R¹²O(CH₂CH₂O)_{q}- (III)
où R¹² est un hydrogène ou un groupe méthyle, et q est un nombre entier de 2 à 100 000.

4. Agent de traitement d'hydrophilisation selon l'une des revendications 1 à 3, comprenant en outre un composé hydrophile (D),
dans lequel le composé hydrophile (D) est une résine ayant un groupe hydrophile,
le groupe hydrophile est un groupe acide carboxylique, un groupe acide sulfonique ou un groupe hydroxyle, et
dans lequel le rapport de masse du composé hydrophile (D) à la masse totale du contenu solide de la résine de la dispersion aqueuse de résine (A), des particules fines réticulables (B) et de la polyétheramine (C), ((D)/((A)+(B)+(C))), est inférieur ou égal à 0,14.

5. Agent de traitement d'hydrophilisation selon l'une des revendications 1 à 4, comprenant en outre un agent de réticulation (E),
dans lequel le rapport de masse de l'agent de réticulation (E) à la masse totale du contenu solide en résine de la dispersion aqueuse de résine (A), des particules fines réticulables (B) et de la polyétheramine (C), ((E)/((A)+(B)+(C))), est inférieur ou égal à 0,10.

6. Agent de traitement hydrophilisant selon l'une quelconque des revendications 1 à 5, dans lequel, dans la dispersion aqueuse de résine (A), le polymère radical (A2) est obtenu par (co)polymérisation radicale dans une solution contenant le copolymère éthylène-alcool vinylique (A1).

7. Procédé de formation d'un film de revêtement hydrophile, comprenant une étape de formation d'un film de revêtement hydrophile consistant à mettre en contact l'agent de traitement hydrophilisant selon l'une quelconque des revendications 1 à 6 avec une surface d'un matériau de base.
